# EUROPEAN PATENT SPECIFICATION

(11) **EP 0 548 696 B1**
(45) Date of publication and mention of the grant of the patent: **17.03.1999**
(21) Application number: 92121088.6
(22) Date of filing: 10.12.1992
(51) Int. Cl.: B29C 70/08, B29K 23/00

(54) **Process for the production of fiber-reinforced polypropylene resin sheets**
Verfahren zur Herstellung von faserverstärkten Kunststoffplatten aus Polypropylen
Procédé pour la fabrication de plaques en polypropylène renforcées par des fibres

(30) Priority: 10.12.1991 JP 325797/91; 26.03.1992 JP 68325/92
(43) Date of publication of application: 30.06.1993
(73) Proprietor: MITSUBISHI CHEMICAL CORPORATION, Chiyoda-ku, Tokyo (JP)
(72) Inventor: Kenyu, Ohno, Mitsubishi Petrochemical Comp. Ltd., Yokkaichi-shi, Mie-ken (JP); Hiroyuki, Uchino, Nippon Steel Corporation, Chiyoda-ku, Tokyo-to (JP)
(74) Representative: Hansen, Bernd, Dr. Dipl.-Chem.

(56) References cited:
- EP-A- 0 148 760
- EP-A- 0 254 806
- EP-A- 0 281 475
- EP-A- 0 300 237
- EP-A- 0 354 288
- AT-B- 388 559
- FR-A- 2 174 786
- DATABASE WPIL Week 9014, Derwent Publications Ltd., London, GB; AN 90-102248 & JP-A-2 051 536 (ASAHI CHEMICAL IND KK) 21 February 1990
- PATENT ABSTRACTS OF JAPAN vol. 9, no. 96 (C-278) 25 April 1985 & JP-A-59 226 041 ( MITSUBISHI YUKA KK ) 19 December 1984
- DATABASE WPIL Week 8235, Derwent Publications Ltd., London, GB; AN 82-73027E & JP-A-57 117 661 (NIPPON PETROCHEM KK) 22 July 1982
- DATABASE WPIL Week 8526, Derwent Publications Ltd., London, GB; AN 85-157214 & JP-A-60 090 239 (MITSUBISHI PETROCH KK) 21 May 1985

## Description

### BACKGROUND OF THE INVENTION

### Field of the Invention

This invention relates to the production of fiber-reinforced resin sheets and particularly to a process for producing glass fiber-reinforced polypropylene resin sheets which are used for automotive parts, electric appliance parts or other industrial parts and civil engineering and construction materials.

This invention further relates to a process for producing glass fiber-reinforced polypropylene resin sheets, which makes it possible to recycle resin-containing scraps from automotive parts, electric appliance parts or other industrial parts as well as from civil engineering and construction materials and packaging materials, or scraps such as flash which are produced as by-products when molding these parts and materials by various molding methods such as injection molding, extrusion molding and sheet forming, by mixing such scraps with glass fiber and polypropylene resins.

The glass fiber-reinforced polypropylene resin sheets produced by the process of the invention, especially because of their high mechanical strength and rigidity, are advantageously used for automotive parts such as bumper beams, front end panels, instrument panels and door trims, domestic appliance housings and panel forms of civil engineering and construction materials.

### Background Art

In the fields of automotive parts, electric appliance parts or other industrial parts and civil engineering and construction materials which are required to have excellent strength, rigidity, durability, dimensional stability, etc., glass fiber-reinforced thermoplastic resin sheets, especially glass fiber-reinforced polypropylene resin sheets which may have been shaped as by bending or compression molding with heat, have so far been used as materials.

Japanese Patent Application JP-A-02051536 discloses a fiber reinforced thermoplastic resin sheet for deep drawing. The sheet contains mixed long and short reinforcing fibers and an inorganic or organic filler. The resin sheet has good surface smoothness and also good mechanical properties.

Austrian Patent AT-B-388559 reveals a process for the production of fiber reinforced polypropylene materials. Waste polypropylene is decomposed by means of peroxide until it has a melt-flow index from 100 to 800 g / 10 min. and is then compressed in a known manner with fiber mats or the like in order to produce the reinforced materials.

EP-A-0 300 237 discloses fibre reinforced resin sheets containing two kinds of polypropylene which differ in regard to the distribution of the molecular weight. According to this reference, the sheets are obtained by contacting the resin in the liquid state with fibre mats, subsequent pressing and cooling.

Glass fiber-reinforced polypropylene resin sheets as prepared by conventional processes such as those of the above-mentioned publications are fairly good in strength and rigidity at normal temperatures, impact resistance at low temperatures and dimensional stability at practical temperatures, and thus meet to a considerable degree the basic requirements of the materials for industrial parts. With these conventional resin sheets, however, there is the problem that as the glass fiber content increases, the degree of improvement in strength and rigidity decreases and over at a certain high level of glass fiber content, the strength and rigidity of the sheets rather drop. There is thus a limitation in the improvement of these properties by the use of a large amount of glass fibers. Moreover, these resin sheets generally suffer from considerable drop in strength and rigidity when exposed to high temperature conditions, and are therefore not suited as materials for articles which are used at high temperatures.

On the other hand, flash and rejects that are produced as by-products during synthetic resin molding processes have generally been recycled, through crushing, as part of raw materials. However, some limitation is placed on their recycling because of change in quality of the product due to the incidental incorporation of different kinds of resins. Used industrial parts and packaging materials of synthetic resins have only partly been recovered and reused in low-grade products and, for the most part, have been still incinerated, buried in the ground or otherwise thrown away. In recent years, however, there is an increased demand for recycling used products of synthetic resins in the light of environmental protection or the effective use of resources.

EP-A-254 806 discloses a process for producing a fiber-reinforced material. In particular, the example of this patent application discloses a process comprising the steps of mixing and dispersing 70% by weight of a polypropylene resin with 30% by weight of glass fibers with a length of 10 mm to form a sheet, drying said sheet and subsequently heating, pressing and cooling it.

Accordingly, it is an object of the invention to provide a process for producing a glass fiber-reinforced polypropylene resin sheet which is less likely to decrease in the degree of improvement in strength and rigidity, even when it contains a large amount of glass fibers, and which is unlikely to decrease in strength and rigidity at high temperatures.

It is another object of the invention to provide a process for producing a glass fiber-reinforced polypropylene resin sheet which makes it possible to recycle scraps such as flash and rejects that are obtained as by-products during synthetic resin molding as well as scraps of used-up products of synthetic resins (these scraps will hereinafter be simply referred to as "resin-containing scrap").

### SUMMARY OF THE INVENTION

It has now been found that the use of a polypropylene resin having a melt flow rate (MFR) of 100 to 600 g/10 min. makes it possible to obtain a glass fiber-reinforced polypropylene resin sheet which is less unlikely to decrease in the degree of improvement in strength and rigidity, even when it contains a large amount of glass fibers, and which is unlikely to decrease in strength and rigidity at high temperatures, and that the use of this polypropylene resin having such a high MFR makes it feasible to recycle the resin-containing scrap.

According to one aspect of the invention, there is provided a process for producing a fiber-reinforced polypropylene resin sheet which comprises mixing and dispersing in water and in the presence of a surfactant (A) 25 to 90% by weight of a polypropylene resin having a melt flow rate of 100 to 600 g/10 min. and (B) 75 to 10% by weight of glass fibers with a length of 3 to 50 mm to form a non-woven fabric form of web, drying the web, and heating, pressing and cooling the web to form into a sheet.

According to another aspect of the invention, there is provided a process for producing a fiber-reinforced polypropylene resin sheet which comprises mixing and dispersing in water and in the presence of a surfactant (A) 25 to 90% by weight of a polypropylene resin having a melt flow rate of 100 to 600 g/10 min., (B) 75 to 10% by weight of glass fibers with a length of 3 to 50 mm and (C) a crushed resin-containing scrap in an amount of 5 to 200 parts by weight based on 100 parts by weight of the sum of (A) and (B) to form a non woven fabric form of web, drying the web, and heating, pressing and cooling the web to form into a sheet.

The fiber-reinforced polypropylene resin sheets obtained by the process according to the invention are excellent in strength and rigidity at high temperatures as well as normal temperatures, and are unlikely to decrease in strength and rigidity even when they contain a very large amount of glass fibers, and so are advantageously used as industrial materials, especially for those articles which may be employed under high-temperature conditions and are required to exhibit high strength and high rigidity at high temperatures.

### DETAILED DESCRIPTION OF THE INVENTION

### [I] PRODUCTION OF FIBER-REINFORCED POLYPROPYLENE RESIN SHEETS

### (1) Starting Materials

### (a) Polypropylene Resin (Component A)

For the polypropylene resin used in the present invention, mention may be specifically made of propylene homopolymers, copolymers of propylene with copolymerizable monomers such as ethylene, copolymers or graft copolymers of propylene with monomers having polar groups such as maleic acid, acrylic acid, and acid anhydrides, e.g., maleic anhydride, and polymer blends or alloys containing polypropylene resins as the main ingredient. Such polypropylene resins may contain various additives generally used with polypropylene resins, such as plasticizers, thermal stabilizers, light stabilizers, fillers, dyes, pigments, impact resistance improvers and nucleating agents.

### Melt Flow Rate (MFR)

The polypropylene resin should have a melt flow rate (MFR) of 100 to 600 g/10 min., as measured at a load of 2.16 kgf/cm² and a temperature of 230°C according to JIS-K7210 (Condition 14). When the crushed resin-containing scrap is not used in the present invention, the MFR of the polypropylene resin is preferably 120 to 500 g/10 min., more preferably 120 to 250 g/10 min. When the crushed resin-containing scrap is used, on the other hand, the MFR is preferably 150 to 500 g/10 min., more preferably 170 to 300 g/10 min.

When the above MFR is lower than 100 g/10 min., the wetting in the interface between the polypropylene resin and the glass fibers (and the crushed resin-containing scrap, if used) is insufficient whereby the resin sheet produced exhibits poor strength and rigidity. Moreover, the use of polypropylene resin with such a low MFR will provide a resin sheet which is inadequate in the improvement in strength and rigidity by the glass fibers at a high degree of glass fiber content, e.g., 40 wt.% or more, and which exhibits poor strength and rigidity at high temperatures, e.g., 80°C or more.

On the other hand, when the MFR of the polypropylene resin is higher than 600 g/10 min., the resulting resin sheet is again poor in strength and rigidity. Further, during the process of producing the resin sheet or the steps of heating and pressing the sheet, such polypropylene resin is melted with fluidity so high that it can separate from glass fibers.

### Form

The polypropylene resin may be used in pelletized, powdery, flaky, fibrous and other forms. In this invention, however, it is preferable to use it in a powdery form, because the mixing and dispersing of the starting components in the process of the invention are conducted in water, i.e. by wet blending, as will be described later. When the resin is used in a powdery form, it preferably has an average particle size of 1 mm or less, particularly 0.1-0.5 mm.

### (b) Glass Fibers (Component B)

The glass fibers to be used in the present invention, which may be in the form of filaments or strands, should be discontinuous fibers having a length of 3-50 mm, preferably 3-25 mm.

It is preferred that the glass fibers have a diameter of 3-25 µm, preferably 6-25 µm.

When the glass fibers have a length shorter than 3 mm or have a diameter larger than 25 µm, the strength and rigidity of the resultant fiber-reinforced polypropylene resin sheet is likely to be lowered. When they have a length longer than 50 mm or have a diameter smaller than 3 µm, it is difficult to effect uniform mixing and dispersing of the starting components.

The glass fibers may be treated on their surfaces with coupling agents such as an aminosilane or epoxysilane coupling agent or binders such as polyvinyl alcohol, polyvinyl acetate and polyurethane, according to necessity.

According to the present invention, other reinforcing fibers such as carbon, aramid, metal and ceramic fibers may be used in combination with the glass fibers, provided that such use does not significantly impair the advantages of the invention.

### (c) Crushed Resin-Containing Scrap (Component C)

### Resin-Containing Scrap

The resin-containing scrap usable in the invention may include flash and rejects produced as by-products when calendering, injection molding, extrusion molding, compression molding, sheet molding, bulk molding and other synthetic resin molding methods are employed to mold thermoplastic resins such as polyolefins (e.g., polyethylene and polypropylene), polyvinyl chloride, polystyrene, ABS resin, polyamide, polyoxymethylene, acrylic resin, polyester, polycarbonate, polyphenylene ether, polyether sulfone, polysulfone, polyether imide and polyether ether ketone; thermosetting resins such as unsaturated polyester, phenolic resin, epoxy resin, urea resin, melamine resin and polyurethane resin; or their modified products, blends or laminates, which may all contain additives, fillers, coloring agents, foaming agents, crosslinking agents and the like. Used products of such synthetic resins may also be used as the resin-containing scrap. Such used products may be coated, painted, metallized, decorated with cloth or fiber-reinforced.

The above resin-containing scrap can contain generally up to 30% by weight of other materials than synthetic resins such as cloth, paper, paints, adhesives, sealants, glass fibers and rock wool.

### Crushed Scrap

The resin-containing scrap mentioned above is crushed into small pieces of about 5 mm or less, preferably 2 mm or less usually by means of mechanical crushing.

The mechanical crushing may be carried out by using mechanical grinders, crushers, mills, etc. generally at a temperature of -40°C to +130°C.

In this connection, it is noted that for such a scrap that is difficult to mechanically crush as it is, crushing may be conducted after the scrap is cooled by means of liquid nitrogen or dry ice. Some scrap, which comprises a plurality kinds of synthetic resins, may be cooled in a low-temperature room at -10°C to -40°C without separation, and then crushed. Separately crushed scrap materials may of course be blended for use as well.

When a non-resinous scrap is used together with a synthetic resin scrap, they may be crushed while remaining mixed, or may be separately crushed and then blended.

### (d) Mixing Ratio

The component (A) which is the high MFR polypropylene resin and the component (B) which is the glass fibers are mixed at an (A) to (B) ratio of 25-90% by weight to 75-10% by weight, preferably 30-80% by weight to 70-20% by weight, more preferably 40-70% by weight to 60-30% by weight.

When the component (A) is used in an amount below 25% by weight, the resultant sheet is poor in impact resistance, surface smoothness and moldability and, when it is used in an amount more than 90% by weight, the effect of the glass fibers on improving the strength and rigidity of the resultant sheet and molded articles will be insufficient.

The component (C), which is the crushed resin-containing scrap, is used in an amount of 5 to 200 parts by weight, preferably 20 to 80 parts by weight based on 100 parts by weight of the sum of components (A) and (B).

The use of component (C) only in a small amount of less than 5 parts by weight will diminish the value or efficiency of scrap recycling. When the component (C) is made up of a thermosetting resin, for instance, and is used in a large amount, e.g. more than 200 parts by weight, a fiber-reinforced polypropylene resin sheet will be produced with difficulty or the sheet produced will be poor in strength and in appearance.

### (2) Mixing and Dispersion (Production of a nonwoven fabric form of web)

According to the process of the invention for producing fiber-reinforced polypropylene resin sheets, the starting polypropylene resin (component (A)), in a powdery form for example, and the starting glass fibers of 3 to 50 mm in length (component (B)), in the form of chopped strands for example, optionally together with the crushed resin-containing scrap (component (C)), are first uniformly mixed and dispersed to form a nonwoven fabric form of web.

The uniform mixing and dispersing of the components effected by wet blending, as set forth below.

### Wet Blending

A powdery polypropylene resin (component (A)) and the glass fibers in the form of, e.g. chopped strands (component (B)), optionally together with the crushed resin-containing scrap (component (C)) are stirred in water in the presence of a surfactant to form a uniform dispersion, which is then dehydrated and dried to form a web.

In the wet blending method, the glass fibers and the crushed scrap are dispersed uniformly and a fiber-reinforced sheet well balanced among such properties as strength, rigidity and dimensional characteristics is obtained.

### (3) Production of Glass Fiber-Reinforced Thermoplastic Resin Sheets

One example of producing glass fiber-reinforced polypropylene resin sheets through the wet blending process will now be explained specifically.

Chopped strands of glass fibers with a length of 3 to 50 mm and a polypropylene resin powder having an average particle diameter of 0.1 to 1 mm, optionally together with a crushed resin-containing scrap of 5 mm or below in size are put in a fully foamed water containing a surfactant in a dispersing tank. In the dispersing tank, stirring is continued so as to uniformly disperse the glass fibers and the polypropylene resin powder, and the optional crushed resin-containing scrap. This stirring at the same time causes the chopped strands to undergo opening.

Then, the fully stirred dispersion is pumped into a head box placed above a mesh type of conveyor belt. Below the mesh type of conveyor belt located under the head box, there is a wet box whose inside is kept at a negative pressure, so that the dispersion in the head box is sucked through the mesh type of conveyor belt for dehydration, thereby obtaining on the mesh type of conveyor belt a web in which the glass fibers and the polypropylene resin powder, and optionally the crushed resin-containing scrap, are uniformly dispersed.

This web is dried in a hot-air oven, and then molten by heating to a temperature exceeding the melting point of the matrix polypropylene resin, preferably to a temperature higher than the melting point by 15 to 60°C. Thereafter, the web melt is pressurized at a pressure of generally from 0.1 to 400 kg/cm² and cooled, so that the glass fibers or the glass fibers and the scrap can be firmly bound to the polypropylene resin or to the polypropylene resin and the scrap resin to obtain a glass fiber-reinforced polypropylene resin sheet with a unit weight of about 500 to 5,000 g/m².

By controlling the pressure applied at this time, it is possible to obtain a nonporous sheet substantially free from any pore or a porous, air-permeating sheet. The glass fiber-reinforced polypropylene resin sheet produced is taken up on a reel or the like, or cut to a given width and length by a cutter for use.

It is noted that when the web is heated, the polypropylene resin must be fully melted, but it is not always necessary to melt the resin-containing scrap.

### [II] FIBER-REINFORCED POLYPROPYLENE RESIN SHEETS

The glass fiber-reinforced thermoplastic resin sheets produced by the process of the present invention, even when they contain glass fibers in an amount as large as 40 to 75% by weight, are not so low in the degree of improvement in strength and rigidity. Furthermore, the resin sheets do not exhibit considerably lowered strength and rigidity, even when used at a temperature as high as about 80 to 120°C.

Accordingly, the fiber-reinforced polypropylene resin sheets obtained according to the invention, because of their very excellent strength and rigidity, provide very useful materials for automotive parts such as bumper beams, front end panels, instrument panels and door trims, housings for domestic electrical appliances, panel forms of civil engineering and construction materials and the like.

### EXAMPLES

The following examples are merely for illustrating the present invention, and not to be limiting thereof.

### Examples 1-4

60% by weight each of four types of powders each having an average particle diameter of about 350 µm, which were respectively obtained by mechanically crushing four propylene homopolymers (trial products made by Mitsubishi Petrochemical Co., Ltd.) in pellet forms respectively having MFRs of 107 g/10 min. (Example 1), 170 g/10 min. (Example 2), 270 g/10 min. (Example 3) and 500 g/10 min. (Example 4), as measured according to JIS-K7210 (Condition 14), and 40% by weight of 13 mm long glass chopped strands of glass fibers having a diameter of 10 µm (trial product made by Nippon Electrical Glass Co., Ltd.) were put in water which had been provided with a surfactant and sufficiently foamed by stirring, and stirred for a further 8 minutes to prepare a uniform dispersion.

This dispersion was placed in a box type 100-mesh filter, and then dehydrated under reduced pressure by means of a vacuum pump to prepare a web having a water content of about 30% by weight. Subsequently, a small amount of a binder was sprayed onto the web, which was then dried in an oven at 120°C for 2 hours.

Using a 70-ton hydraulic press machine, the dried web was heated and pressed at 210°C at 25 kgf/cm², and was thereafter cooled to form a sheet of 31 cm × 34 cm in size and 3.8 mm in thickness.

This sheet was cut to obtain test pieces, which were then subjected to JIS-K7203 testing to measure the flexural strength and flexural modulus each at 23°C and 90°C, and to JIS-K7110 testing to measure the Izod impact strength at 23°C. The results are shown in Table 1.

Also cut from the same sheet was a piece of 10 cm × 10 cm in size, which was heated to 220°C by means of a far infrared heater and then pressed at a pressure of 200 kgf/cm² using a hydraulic press machine and a male-female mold to obtain a flat sheet of 15 cm × 15 cm in size. Cut from the four corners of this flat sheet were four test pieces of 3 cm × 3 cm in size, which were then used to measure the content of glass fibers by the incineration method. The results are shown in Table 1.

### Examples 5-7

The procedure of Example 2 was repeated except that the content of glass chopped strands was changed to 50% by weight (Example 5), 60% by weight (Example 6) and 70% by weight (Example 7). The results are shown in Table 1.

### Comparative Examples 1-4

The procedure of Examples 1-4 was repeated except that four propylene homopolymers were respectively used, which had MFRs of 5 g/10 min. (MA 4 made by Mitsubishi Petrochemical Co., Ltd. - Comparative Example 1), 30 g/10 min. (trial product made by Mitsubishi Petrochemical Co., Ltd. - Comparative Example 2), 70 g/10 min. (trial product made by Mitsubishi Petrochemical Co., Ltd. - Comparative Example 3) and 800 g/10 min. (trial product made by Mitsubishi Petrochemical Co., Ltd. - Comparative Example 4). The results are shown in Table 1.

### Comparative Examples 5-6

The procedure of Comparative Example 2 was repeated except that the amount of glass chopped strands was changed to 50% by weight (Comparative Example 5) and 60% by weight (Comparative Example 6). The results are shown in Table 1.

### Comparative Examples 7-12

The procedure of Examples 1-4 was repeated except that the glass fibers were not used and some of the propylene homopolymers used in the preceding examples and shown in Table 1 were respectively used. In these comparative examples, the measurement of glass fiber content was not conducted. The results are shown in Table 1.

### Example 8

Using 43% by weight of the same polypropylene resin powder as used in Example 2, 57% by weight of the same glass chopped strands as in Example 2 and 43 parts by weight based on 100 parts by weight of the sum of the powder and strands of crushed automotive bumper scrap having an average particle diameter of about 2 mm (made of polypropylene and pointed with metallic painting material), a dry web was prepared in the same manner as in Examples 1-4. Using the same press machine, the web was then heated and pressed at 210°C and 0.5 kgf/cm² for 7 minutes and at the same temperature and 10 kgf/cm² for a further 2 minutes, and cooled to form a sheet of 31 cm × 34 cm in size and 3 mm in thickness.

Cut from this sheet were test pieces, which were subjected to JIS-K7203 testing to measure the flexural strength and the flexural modulus at 23°C and JIS-K7110 testing to measure the Izod impact resistance at 23°C. Also cut from the same sheet was a test piece of 10 cm × 10 cm, which was then heated to 220°C by means of a far infrared heater and pressed at a pressure of 200 kgf/cm² using a hydraulic press machine to obtain a flat sheet. This flat sheet was observed in terms of flow homogeneity (i.e., whether or not there was the sole flow of polypropylene). The results are shown in Table 2.

### Examples 9-10

The procedure of Example 8 was repeated except that the same polypropylene resin powder as used in Example 3 (Example 9) and the same polypropylene resin powder as used in Example 4 (Example 10) were respectively used. The results are shown in Table 2.

### Examples 11-12

The procedure of Example 9 was repeated except that the amount of the polypropylene resin powder used was 33% by weight, the amount of the glass chopped strands used was 67% by weight and the amount of the crushed automotive bumper scrap used was 67 parts by weight - Example 11; and the amount of the polypropylene powder used was 57% by weight, the amount of the glass chopped strands used was 43% by weight and the amount of the crushed automotive bumper scrap was 43 parts by weight - Example 12. The results are shown in Table 2.

### Example 13

The procedure of Example 9 was repeated except that scrap of a mixed polyester/polyamide nonwoven fabric used as part Of an automotive interior trim was used in place of the automotive bumper scrap. The results are shown in Table 2.

### Example 14

The procedure of Example 9 was repeated except that scrap of a painted SMC part used as an exterior automotive trim was used in place of the automotive bumper scrap, the polypropylene resin powder was used in an amount of 69% by weight and the glass chopped strands were used in an amount of 31% by weight. The results are shown in Table 2.

### Comparative Examples 13-15

The procedure of Example 9 was repeated except that propylene homopolymers with MFRs of 25 g/10 min. (trial product made by Mitsubishi Petrochemical Co., Ltd. - Comparative Example 13), 95 g/10 min. (trial product made by Mitsubishi Petrochemical Co., Ltd. - Comparative Example 14) and 800 g/10 min. (trial product made by Mitsubishi Petrochemical Co., Ltd. - Comparative Example 14) were respectively used. The results are shown in Table 2.

### Comparative Example 16

The procedure of Example 13 was repeated except that the same polypropylene resin powder as used in Comparative Example 14 was used. The results are shown in Table 2.

### Comparative Example 17

The procedure of Example 14 was repeated except that the same polypropylene resin powder as used in Comparative Example 14 was used. The results are shown in Table 2.

**Table 1**

| | Polypropylene Resin | | Amount of Glass Fibers (wt.%) | Flexural Strength (kgf/mm²) | | Flexural Modulus (kgf/mm²) | | Izod Impact Strength (kgf·cm/cm) | Glass Fiber Content of Sheet (wt.%) |
|---|---|---|---|---|---|---|---|---|---|
| | MFR (g/10 min) | Amount (wt.%) | | 23°C | 90°C | 23°C | 90°C | | |
| Ex. 1 | 107 | 60 | 40 | 11.3 | 9.2 | 614 | 502 | 67 | 39.6 |
| Ex. 2 | 170 | 60 | 40 | 13.3 | 11.1 | 633 | 517 | 72 | 40.1 |
| Ex. 3 | 270 | 60 | 40 | 13.0 | 10.9 | 630 | 491 | 65 | 39.2 |
| Ex. 4 | 500 | 60 | 40 | 12.8 | 10.3 | 624 | 474 | 61 | 39.0 |
| Ex. 5 | 170 | 50 | 50 | 15.5 | 12.6 | 690 | 562 | 80 | 49.2 |
| Ex. 6 | 170 | 40 | 60 | 16.8 | 13.7 | 775 | 637 | 93 | 59.5 |
| Ex. 7 | 170 | 30 | 70 | 18.7 | 15.5 | 845 | 691 | 109 | 68.8 |
| Comp.Ex. 1 | 5 | 60 | 40 | 7.2 | 5.0 | 520 | 384 | 48 | 39.6 |
| Comp.Ex. 2 | 30 | 60 | 40 | 8.4 | 6.0 | 543 | 402 | 52 | 39.9 |
| Comp.Ex. 3 | 70 | 60 | 40 | 8.9 | 6.5 | 573 | 430 | 55 | 39.7 |
| Comp.Ex. 4 | 800 | 60 | 40 | 9.1 | 6.8 | 563 | 421 | 42 | 30.5 |
| Comp.Ex. 5 | 30 | 50 | 50 | 10.3 | 7.6 | 599 | 444 | 62 | 49.1 |
| Comp.Ex. 6 | 30 | 40 | 60 | 11.6 | 8.0 | 642 | 473 | 68 | 58.9 |
| Comp.Ex. 7 | 30 | 100 | 0 | 2.8 | 0.9 | 145 | 45 | 3 | -- |
| Comp.Ex. 8 | 70 | 100 | 0 | 2.8 | 0.9 | 148 | 45 | <3 | -- |
| Comp.Ex. 9 | 107 | 100 | 0 | 2.8 | 0.9 | 150 | 46 | <3 | -- |
| Comp.Ex. 10 | 170 | 100 | 0 | 2.9 | 0.9 | 155 | 48 | <3 | -- |
| Comp.Ex. 11 | 270 | 100 | 0 | 3.0 | 1.0 | 156 | 48 | <3 | -- |
| Comp.Ex. 12 | 500 | 100 | 0 | 3.1 | 1.0 | 158 | 49 | <3 | -- |

**Table 2**

| | Polypropylene Resin | | Amount of Glass Fibers (wt.%) | Crushed Scrap | | Flexural Strength (23°C) (kgf/mm²) | Flexural Modulus (23°C) (kgf/mm²) | Izod Impact Strength (23°C) (kgf·cm/cm) | Homogeneity of Sheet (Presence of sole flow of polypropylene |
|---|---|---|---|---|---|---|---|---|---|
| | MFR (g/10 min) | Amount (wt.%) | | Type | Amount (parts by weight) | | | | |
| Ex. 8 | 170 | 43 | 57 | Bumper | 43 | 10.7 | 591 | 60 | None |
| Ex. 9 | 270 | 43 | 57 | Bumper | 43 | 11.1 | 623 | 63 | None |
| Ex. 10 | 500 | 43 | 57 | Bumper | 43 | 12.3 | 627 | 62 | None |
| Ex. 11 | 270 | 33 | 67 | Bumper | 67 | 10.7 | 588 | 59 | None |
| Ex. 12 | 270 | 57 | 43 | Bumper | 43 | 8.5 | 561 | 52 | None |
| Ex. 13 | 270 | 43 | 57 | Nonwoven Fabric | 43 | 13.7 | 636 | 63 | None |
| Ex. 14 | 270 | 69 | 31 | SMC | 43 | 13.4 | 585 | 58 | None |
| Comp.Ex. 13 | 25 | 43 | 57 | Bumper | 43 | 7.8 | 555 | 45 | None |
| Comp.Ex. 14 | 95 | 43 | 57 | Bumper | 43 | 8.2 | 558 | 49 | None |
| Comp.Ex. 15 | 800 | 43 | 57 | Bumper | 43 | 7.7 | 540 | 47 | Found |
| Comp.Ex. 16 | 95 | 43 | 57 | Nonwoven Fabric | 43 | 11.7 | 596 | 49 | None |
| Comp.Ex. 17 | 95 | 69 | 31 | SMC | 43 | 11.4 | 519 | 48 | None |

## Claims

1. A process for producing a fiber-reinforced polypropylene resin sheet comprising the steps of:
- mixing and dispersing in water and in the presence of a surfactant
(A) 25 to 90wt% of a polypropylene resin and
(B) 75 to 10wt% of glass fibers with a length of 3 to 50 mm to form a non-woven fabric form of web,
- drying said non-woven fabric form of web and
- heating, pressing and cooling said non-woven fabric form of web into a sheet,
characterized in that the polypropylene resin has a meltflow rate of 100 to 600 g/10 min.

2. The process according to claim 1, wherein the polypropylene resin is in a powdery form having an average particle diameter of 1 mm or less.

3. The process according to claim 2, wherein the polypropylene resin powder has an average particle diameter of 0.1 to 0.5 mm.

4. The process according to any one of the preceding claims, wherein the polypropylene resin has a melt flow rate of 120 to 500 g/10 min.

5. The process according to claim 4, wherein said melt flow rate is 120 to 250 g/10 min.

6. The process according to any one of the preceding claims, wherein the glass fibers have a length of 3 to 25 mm.

7. The process according to any one of the preceding claims, wherein the glass fibers have a diameter of 3 to 25 µm.

8. The process according to any one of the preceding claims, wherein the polypropylene resin is used in an amount of 30 to 80% by weight and the glass fibers are used in an amount of 70 to 20% by weight.

9. The process according to claim 8, wherein the amount of the polypropylene resin is 40 to 70% by weight and the amount of the glass fibers is 60 to 30% by weight.

10. The process according to any one of the preceding claims, wherein the mixing and dispersing of the polypropylene resin and the glass fibers is conducted in water in the presence of a surfactant.

11. A process according to claim 1, further characterized in that component (C), a crushed resin-containing scrap in an amount of 5 to 200 parts by weight based on 100 parts by weight of the sum of (A) and (B), is additionally present in the mixing step.

12. The process according to claim 11, wherein the polypropylene resin is in a powdery form having an average particle diameter of 1 mm or less.

13. The process according to claim 12, wherein the polypropylene resin powder has an average particle diameter of 0.1 to 0.5 mm.

14. The process according to any one of claims 11 to 13, wherein the polypropylene resin has a melt flow rate of 150 to 500 g/10 min.

15. The process according to claim 14, wherein said melt flow rate is 170 to 300 g/10 min.

16. The process according to any one of claims 11 to 15, wherein the glass fibers have a length of 3 to 25 mm.

17. The process according to any one of claims 11 to 16, wherein the glass fibers have a diameter of 3 to 25 µm.

18. The process according to any one of claims 11 to 17, wherein the crushed resin-containing scrap has a size of 5 mm or less.

19. The process according to any one of claims 11 to 18, wherein the polypropylene resin is used in an amount of 30 to 80% by weight and the glass fibers are used in an amount of 70 to 20% by weight.

20. The process according to claim 19, wherein the amount of the polypropylene resin is 40 to 70% by weight and the amount of the glass fibers is 60 to 30% by weight.

21. The process according to any one of claims 11 to 20, wherein the amount of the crushed resin-containing scrap is 20 to 80 parts by weight.

22. The process according to any one of claims 11 to 21, wherein the mixing and dispersing of the polypropylene resin, the glass fibers and the crushed resin-containing scrap is conducted in water in the presence of a surfactant.

## Patentansprüche

1. Verfahren zur Herstellung einer faserverstärkten Polypropylenharz-Folie, umfassend die Schritte:
- Vermischen und Dispergieren in Wasser und in Gegenwart eines oberflächenaktiven Mittels von
(A) 25 bis 90 Gew.-% Polypropylenharz und
(B) 75 bis 10 Gew.-% Glasfasern mit einer Länge von 3 bis 50 mm unter Bildung einer Bahn der Non-Woven-Gewebe-Art;
- Trocknen der Bahn der Non-Woven-Gewebe-Art und
- Erhitzen, Pressen und Kühlen der Bahn der Non-Woven-Gewebe-Art zu einer Folie,
dadurch **gekennzeichnet,** daß
das Polypropylenharz eine Fließfähigkeit von 100 bis 600 g/10 min hat.

2. Verfahren nach Anspruch 1, wobei das Polypropylenharz in pulvriger Form mit einem durchschnittlichen Partikeldurchmesser von 1 mm oder weniger vorliegt.

3. Verfahren nach Anspruch 2, wobei das Polypropylenharz-Pulver einen durchschnittlichenen Partikeldurchmesser von 0,1 bis 0,5 mm hat.

4. Verfahren nach einem der vorangehenden Ansprüche, wobei das Polypropylenharz eine Fließfähigkeit von 120 bis 500 g/10 min hat.

5. Verfahren nach Anspruch 4, wobei die Fließfähigkeit 120 bis 250 g/10 min ist.

6. Verfahren nach einem der vorangehenden Ansprüche, wobei die Glasfasern eine Länge von 3 bis 25 mm haben.

7. Verfahren nach einem der vorangehenden Ansprüche, wobei die Glasfasern einen Durchmesser von 3 bis 25 µm haben.

8. Verfahren nach einem der vorangehenden Ansprüche, wobei das Polypropylenharz in einer Menge von 30 bis 80 Gew.-% und die Glasfasern in einer Menge von 70 bis 20 Gew.-% verwendet werden.

9. Verfahren nach Anspruch 8, wobei die Menge des Polypropylenharzes 40 bis 70 Gew.-% ist, und die Menge der Glasfasern 60 bis 30 Gew.-% ist.

10. Verfahren nach einem der vorangehenden Ansprüche, wobei das Vermischen und Dispergieren des Polypropylenharzes und der Glasfasern in Wasser in Gegenwart eines oberflächenaktiven Mittels durchgeführt wird.

11. Verfahren nach Anspruch 1, das weiter dadurch charakterisiert ist, daß im Schritt des Vermischens zusätzlich Komponente (C), zerkleinerter harzhaltiger Abfall, in einer Menge von 5 bis 200 Gew.-Teilen, bezogen auf 100 Gew.-Teile der Summe aus (A) und (B), vorhanden ist.

12. Verfahren nach Anspruch 11, wobei das Polypropylenharz in pulvriger Form mit einem durchschnittlichen Partikeldurchmesser von 1 mm oder weniger vorliegt.

13. Verfahren nach Anspruch 12, wobei das Polypropylenharz-Pulver eine durchschnittliche Partikelgröße von 0,1 bis 0,5 hat.

14. Verfahren nach einem der Ansprüche 11 bis 13, wobei das Polypropylenharz eine Fließfähigkeit von 150 bis 500 g/10 min hat.

15. Verfahren nach Anspruch 14, wobei die Fließfähigkeit 170 bis 300 g/10 min ist.

16. Verfahren nach einem der Ansprüche 11 bis 15, wobei die Glasfasern eine Länge von 3 bis 25 mm haben.

17. Verfahren nach einem der Ansprüche 11 bis 16, wobei die Glasfasern einen Durchmesser von 3 bis 25 µm haben.

18. Verfahren nach einem der Ansprüche 11 bis 17, wobei der zerkleinerte harzartige Abfall eine Größe von 5 mm oder weniger hat.

19. Verfahren nach einem der Ansprüche 11 bis 18, wobei das Polypropylenharz in einer Menge von 30 bis 80 Gew.-% verwendet wird, und die Glasfasern in einer Menge von 70 bis 20 Gew.-% verwendet werden.

20. Verfahren nach Anspruch 19, wobei die Menge des Polypropylenharzes 40 bis 70 Gew.-% ist, und die Menge der Glasfasern 60 bis 30 Gew.-% ist.

21. Verfahren nach einem der Ansprüche 11 bis 20, wobei die Menge des zerkleinerten harzhaltigen Abfalls 20 bis 80 Gew.-Teile ist.

22. Verfahren nach einem der Ansprüche 11 bis 21, wobei das Vermischen und Dispergieren des Polypropylenharzes, der Glasfasern und des zerkleinerten harzhaltigen Abfalls in Wasser in Gegenwart eines oberflächenaktiven Mittels durchgeführt wird.

## Revendications

1. Procédé de production d'une feuille en résine de polypropylène renforcée par fibres, comportant les étapes consistant à :
- mélanger et disperser dans l'eau et en présence d'un agent tensioactif
(A) de 25 à 90% en poids d'une résine de polypropylène, et
(B) de 75 à 10% en poids de fibres de verre d'une longueur de 3 à 50 mm, pour former une nappe sous la forme d'un tissu non tissé,
- sécher ladite nappe en forme de tissu non tissé, et
- chauffer, presser et refroidir en une feuille ladite nappe en forme de tissu non tissé,
caractérisé en ce que la résine de polypropylène présente une fluidité à l'état fondu de 100 à 600 g/10 min.

2. Procédé selon la revendication 1, dans lequel la résine de polypropylène se présente sous la forme d'une poudre dont les particules ont un diamètre moyen de 1 mm ou moins.

3. Procédé selon la revendication 2, dans lequel la poudre de résine de polypropylène présentent des particules d'un diamètre moyen de 0,1 à 0,5 mm.

4. Procédé selon l'une quelconque des revendications précédentes, dans lequel la résine de polypropylène présente une fluidité à l'état fondu de 120 à 500 g/10 min.

5. Procédé selon la revendication 4, dans lequel ladite fluidité à l'état fondu est de 120 à 250 g/10 min.

6. Procédé selon l'une quelconque des revendications précédentes, dans lequel les fibres de verre ont une longueur de 3 à 25 mm.

7. Procédé selon l'une quelconque des revendications précédentes, dans lequel les fibres de verre ont un diamètre de 3 à 25 µm.

8. Procédé selon l'une quelconque des revendications précédentes, dans lequel la résine de polypropylène est utilisée en quantité de 30 à 80% en poids, et les fibres de verre sont utilisées en quantité de 70 à 20% en poids.

9. Procédé selon la revendication 8, dans lequel la quantité de la résine de polypropylène est de 40 à 70% en poids, et la quantité des fibres de verre est de 60 à 30% en poids.

10. Procédé selon l'une quelconque des revendications précédentes, dans lequel le mélange et la dispersion de la résine de polypropylène et des fibres de verre sont effectués dans l'eau, en présence d'un agent tensioactif.

11. Procédé selon la revendication 1, caractérisé en outre en ce qu'un composant (C), un refus broyé contenant de la résine, est présent en supplément dans l'étape de mélange, en quantité de 5 à 200 parties en poids pour 100 parties en poids de la somme de (A) et (B).

12. Procédé selon la revendication 11, dans lequel la résine de polypropylène se présente sous la forme d'une poudre dont les particules ont un diamètre moyen de 1 mm ou moins.

13. Procédé selon la revendication 12, dans lequel la poudre de résine de polypropylène présente des particules d'un diamètre moyen de 0,1 à 0,5 mm.

14. Procédé selon l'une quelconque des revendications 11 à 13, dans lequel la résine de polypropylène présente une fluidité à l'état fondu de 150 à 500 g/10 min.

15. Procédé selon la revendication 14, dans lequel ladite fluidité à l'état fondu est de 170 à 300 g/10 min.

16. Procédé selon l'une quelconque des revendications 11 à 15, dans lequel les fibres de verre ont une longueur de 3 à 25 mm.

17. Procédé selon l'une quelconque des revendications 11 à 16, dans lequel les fibres de verre ont un diamètre de 3 à 25 µm.

18. Procédé selon l'une quelconque des revendications 11 à 17, dans lequel le refus broyé contenant de la résine à une taille de 5 mm ou moins.

19. Procédé selon l'une quelconque des revendications 11 à 18, dans lequel la résine de polypropylène est utilisée en quantité de 30 à 80% en poids, et les fibres de verre sont utilisées en quantité de 70 à 20% en poids.

20. Procédé selon la revendication 19, dans lequel la quantité de la résine de polypropylène est de 40 à 70% en poids et la quantité des fibres de verre de 60 à 30% en poids.

21. Procédé selon l'une quelconque des revendications 11 à 20, dans lequel la quantité de refus broyé contenant de la résine est de 20 à 80 parties en poids.

22. Procédé selon l'une quelconque des revendications 11 à 21, dans lequel le mélange et la dispersion de la résine de propylène, des fibres de verre et du refus broyé contenant de la résine sont effectués dans l'eau, en présence d'un agent tensioactif.
